# FASCICULE DE BREVET EUROPEEN

(11) **EP 0 962 754 B1**
(45) Date de publication et mention de la délivrance du brevet: **06.11.2002**
(21) Numéro de dépôt: 97870208.2
(22) Date de dépôt: 24.12.1997
(51) Int. Cl.: G01M 3/16

(54) **Procédé de détection de fuites et dispositif pour la mise en oeuvre de ce procédé**
Methode und Einrichtung zur Dichtigkeitsprüfung
Method and apparatus for leak detection

(43) Date de publication de la demande: 08.12.1999
(73) Titulaire: Tarkett Sommer S.A., 92748 Nanterre Cedex (FR); SENSOR, CS-811 07 Bratislava (CS)
(72) Inventeur: Boudeau,Jean-Michel, 08000 La Francheville (FR); Nosko,Vladimir, 84105 Bratislava (CS)
(74) Mandataire: Van Malderen, Joelle

(56) Documents cités:
- EP-A- 0 418 209
- WO-A-88/06929
- DE-A- 4 024 049
- FR-A- 2 298 760

## Description

### Objet de l'invention

La présente invention se rapporte tout d'abord à un procédé de détection de fuites, et en particulier de fuites dans ou sous un revêtement d'étanchéité tel une couche d'isolation disposée par exemple au fond de décharges publiques pour déchets industriels, ménagers ou autres, ou au fond de réservoirs ou de bassins de rétention, ou toute autre application équivalente.

La présente invention se rapporte également au dispositif pour la mise en oeuvre du procédé.

### Arrière-plan technologique à la base de l'invention

Il est connu de disposer au fond de décharges ou de bassins des géotextiles assurant soit des fonctions de drainage, soit des fonctions d'isolation.

En particulier, le document EP-A-0418209 décrit un procédé de détection de fuites, en particulier de fuites dans une couche d'isolation, dans lequel on applique sous la couche d'isolation un géotextile pourvu de fils conducteurs et sur lesquels on applique une tension électrique au moins entre deux fils conducteurs, de façon à déterminer l'intensité du courant et/ou la résistance entre les deux fils.

Il convient néanmoins de noter que ce procédé de détection ne fonctionnera que dans le cas où le sol est déjà humidifié, c'est-à-dire dans le cas où une fuite aura déjà eu lieu, ce procédé ne pouvant être appliqué sur un sol sec.

On connaît également par la publication WO94/02822 un dispositif et un procédé d'inspection du statut d'une couche d'isolation séparant un objet à isoler de son environnement et qui consiste à prévoir une électrode active disposée en-dehors de la zone d'isolation et au moins une électrode sensible disposée soit au-dessus, soit en dessous de ladite couche d'isolation, un dispositif comprenant une source d'énergie électrique permettant de connecter ladite électrode active à (aux) électrode(s) sensible(s), permettant de mesurer et/ou enregistrer les valeurs du champ électrique créé dans la zone proche de la couche d'étanchéité. Dans ce document, les électrodes sensibles sont disposées à même le sol dans la zone proche de la couche d'étanchéité.

D'autre part, depuis quelques années, on demande d'améliorer l'étanchéité des ouvrages d'art en proposant un dispositif d'étanchéité double membrane, qui comprend deux membranes séparées par une couche intermédiaire qui est habituellement constituée d'un gravier, d'un argile ou même d'un géotextile. Ce type de produit permet d'augmenter la sécurité en diminuant le risque d'une fuite intempestive avec l'environnement.

Ce type de protection est plus particulièrement choisi lorsqu'il y a lieu d'éviter toute contamination extérieure à l'ouvrage d'art.

Le document EP-A-0 418 209 décrit un procédé de détection de fuites, en particulier de fuites dans une couche d'isolation, dans lequel on applique sous la couche d'isolation un géotextile pourvu de fils conducteurs sensiblement parallèles, on applique une tension électrique entre au moins deux fils conducteurs et on détermine l'intensité de courant et/ou la résistance entre les deux fils. Ce document EP-A-0 418 209 se rapporte également au géotextile utilisé dans le procédé. Ce géotextile est pourvu de fils conducteurs sensiblement parallèles. Ce peut être soit un tissu, soit un non-tissé. Aucune autre précision concernant les caractéristiques de ce géotextile ne figure dans ce document.

Le document WO88/06929 se rapporte à la structure d'un lit telle que le fond d'une décharge à déchets, comprenant une double membrane étanche au liquide, avec une membrane supérieure et une membrane inférieure. Entre ces deux membranes est présente une couche intermédiaire d'un matériau poreux, à l'intérieur de laquelle sont disposés des moyens électriques de détection d'humidité destinés à détecter d'éventuelles fuites de liquide à travers ladite membrane supérieure. Il est y précisé en outre que les membranes supérieure et inférieure peuvent être des feuilles de plastique. De même, il y est décrit que le matériel poreux peut être du sable ou du gravier.

Le document WO 94/02822 décrit un dispositif pour inspecter l'état d'intégrité d'une couche d'isolation séparant un objet isolé de son environnement, dans lequel :
- au moins une électrode active est placée sur le côté extérieur et/ou le côté intérieur de la couche d'isolation ;
- au moins une électrode sensible est placée à proximité de la couche d'isolation ; et
- au moins une électrode active ou au moins une électrode sensible est placée à l'intérieur de la couche d'isolation.

En outre, le dispositif comprend une électrode active placée en dehors de la zone d'étanchéité.

Par ailleurs, le dispositif est équipé d'une source de tension électrique capable d'être connectée aux électrodes actives. Les électrodes actives et sensibles sont reliées à une unité d'enregistrement et d'évaluation.

Les électrodes sensibles mesurent et enregistrent les valeurs du champ électrique généré artificiellement à proximité de la couche d'isolation en connectant les électrodes actives à la source de tension électrique et en mesurant les augmentations de la tension électrique à proximité de la couche d'isolation.

### Buts de l'invention

La présente invention vise à proposer un procédé et un dispositif de détection et/ou de surveillance de fuites se produisant sous des ouvrages d'art, des décharges et/ ou bassins équipés.

Plus particulièrement, la présente invention vise à proposer un procédé et un dispositif de détection et/ou de surveillance de fuites d'ouvrages pourvus d'une étanchéité double membrane.

### Principaux éléments caractéristiques de l'invention

La présente invention se rapporte à un procédé de détection de fuites et/ou de surveillance d'ouvrages d'art munis d'une double membrane d'étanchéité, caractérisé en ce qu'entre les deux membranes d'étanchéité, on dispose un géotextile conducteur réalisé à partir d'au moins une nappe non tissée comprenant des fibres antistatiques présentant une conductibilité électrique avec une résistance ohmique linéaire inférieure à 1.10⁶ Ohm/cm, ledit géotextile conducteur étant associé à un réseau d'électrodes sensibles, elles-mêmes reliées à une électrode. active disposée en-dehors de la zone d'étanchéité, et en ce que l'on effectue une mesure du champ électrique et/ou magnétique par les électrodes sensibles en vue de permettre la détection d'une fuite.

De préférence, le géotextile conducteur est réalisé à partir d'au moins une nappe non tissée comprenant des fibres antistatiques présentant une conductibilité électrique avec une résistance ohmique linéaire inférieure à 1.10⁶ Ohm/cm, et est associé à un réseau d'électrodes sensibles, elles-mêmes reliées à une électrode active disposée en dehors de la zone d'étanchéité.

Avantageusement, le géotextile conducteur est réalisé à partir d'au moins une nappe non tissée comprenant un mélange de fibres dont des fibres antistatiques dans une proportion de 1 à 5% mélangées à des fibres non antistatiques.

Dans une forme de réalisation préférée, les fibres antistatiques sont des fibres, de préférence polyamide, qui présentent à leur périphérie une faible couche d'un revêtement conducteur.

Dans une autre forme de réalisation préférée, le revêtement conducteur est une couche de sulfure.

Avantageusement, les fibres non antistatiques présentes dans le mélange de fibres constituant la nappe non tissée sont sélectionnées parmi le groupe constitué par des fibres polyamide, polypropylène, polyéthylène ou un mélange de celles-ci.

Plus avantageusement encore, le géotextile est constitué à partir d'au moins deux nappes non tissées solidarisées entre elles dont au moins l'une est une nappe comprenant des fibres antistatiques, des mini-drains étant éventuellement placés entre lesdites nappes.

### Brève description des figures

La présente invention sera mieux décrite à l'aide des différentes figurent qui suivent, dans lesquelles :
- La figure 1: représente une vue en coupe d'une décharge dans laquelle le procédé de détection et/ou de surveillance de fuites selon l'invention sera utilisé.
- La figure 2: représente une vue de détail d'un géotextile utilisé pour le procédé de la présente invention.
- La figure 3: représente un autre exemple d'un géotextile utilisé dans le procédé selon la présente invention.
- La figure 4: représente encore un autre exemple d'un géotextile utilisé dans le procédé selon la présente invention.

Les mêmes références se rapportant à des éléments identiques ou analogues sur les différentes figures seront utilisées.

### Description d'une forme d'exécution préférée de l'invention

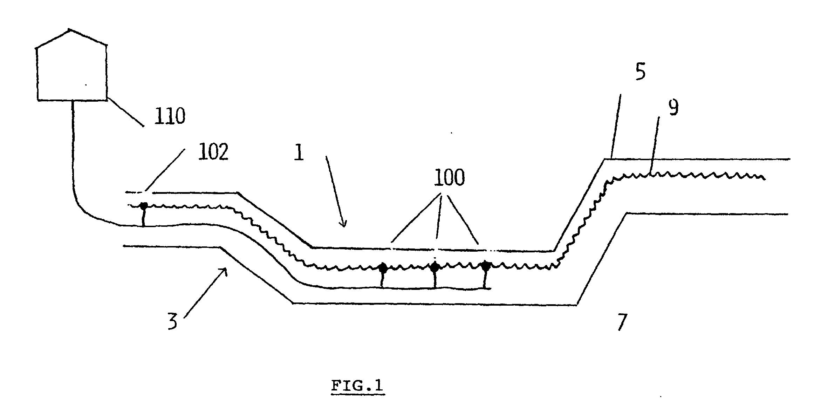

Le procédé de détection et/ou de surveillance de fuites selon la présente invention peut être appliqué à la surveillance d'une décharge (pour déchets industriels ou ménagers), telle que représentée à la figure 1. Le procédé pourrait également être appliqué à la surveillance d'un bassin de rétention d'eau, par exemple comme ceux présents le long des routes, ou même de bassins de rétention de liquides chimiques dans le cas d'une utilisation sur des sites industriels.

D'autres applications pourront également être envisagées dans le cadre de la présente invention, par exemple la détection et/ou la surveillance de fuites pouvant se produire dans un tunnel équipé d'une double membrane d'étanchéité, ces fuites pouvant être dues à des mouvements de terrain par exemple. On peut également citer un plan d'eau récréatif pourvu d'une double membrane d'étanchéité qui vise à éviter toute contamination de l'environnement, par exemple des nappes phréatiques proches.

De manière classique, une décharge est équipée sur les parois latérales et sur le fond d'un complexe constitué à partir d'un ou plusieurs géotextiles faisant office d'isolation et éventuellement permettant un drainage adéquat du liquide et/ou gaz présent dans l'environnement de la couche d'isolation.

La figure 1 représente une décharge (1) dans laquelle on a disposé une couche d'étanchéité (3) constituée de membranes (5 et 7) entre lesquelles est disposé le dispositif destiné à effectuer la mesure d'un champ électrique / magnétique permettant de détecter la présence d'une fuite et/ou surveiller l'étanchéité de la couche 3.

Par "membrane", on entend un revêtement étanche présentant une épaisseur supérieure à 5 mm et qui présente une résistance à la perforation suffisante. Cette membrane étanche peut être réalisée en PVC, en polyéthylène très basse densité, basse densité ou même haute densité, ou encore en polypropylène. On peut également envisager d'utiliser une membrane bitumineuse.

Selon la figure 1, la membrane supérieure (5) est en contact direct avec les liquides présents dans la décharge, tandis que la membrane inférieure (7) adhère au milieu environnant. Dans la couche intermédiaire (9) entre les deux membranes, on a disposé un réseau d'électrodes sensitives (100) qui habillent directement cette couche intermédiaire (9).

Selon l'état de la technique, cette couche intermédiaire (9) est habituellement constituée de terre, d'argile ou de gravier.

D'autre part, on a prévu le placement d'une électrode dite active (102) disposée en-dehors de la zone d'étanchéité et qui est destinée à permettre la mesure et/ou l'enregistrement d'une valeur se rapportant au champ électrique / magnétique créé entre l'électrode active (102) et la ou les électrodes sensibles (100). Un dispositif (110) de mesure et d'enregistrement est également prévu.

Selon la présente invention, on vise à proposer le placement d'un géotextile conducteur (90) entre la première et la seconde membranes (5 et 7), et dans lequel sont incluses les électrodes sensibles (100).

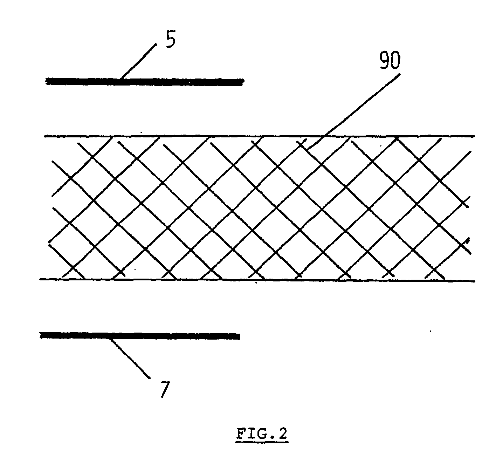

Un premier exemple d'un tel géotextile (90) est décrit à la figure 2, dans laquelle une nappe comprenant un mélange de fibres polypropylène/polyéthylène présentant un titre compris entre 6 et 22 dtex est mélangé à des fibres polyamide antistatiques selon une proportion de 1 à 5% du mélange total en vue de constituer un géotextile présentant une épaisseur de 4 à 7 mm pour une masse surfacique de 300 à 1000 g/m².

Les fibres antistatiques sont des fibres connues pour leurs propriétés de conductibilité électrique. Elles peuvent être, à titre d'exemple, des fibres polyamide à la périphérie desquelles on a fixé par un traitement chimique une faible couche (0,2 µ) de sulfure de cuivre conducteur, la couche de sulfure de cuivre étant occluse dans le polymère lui assurant une bonne permanence à l'usage.

Ces fibres présentent une conductibilité électrique régulière avec une résistance ohmique linéaire inférieure à 1.10⁶ Ohm/cm.

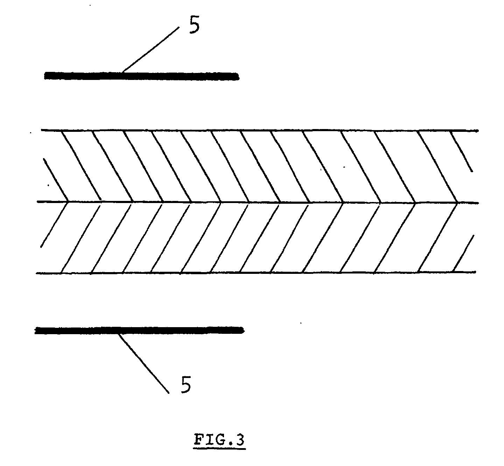

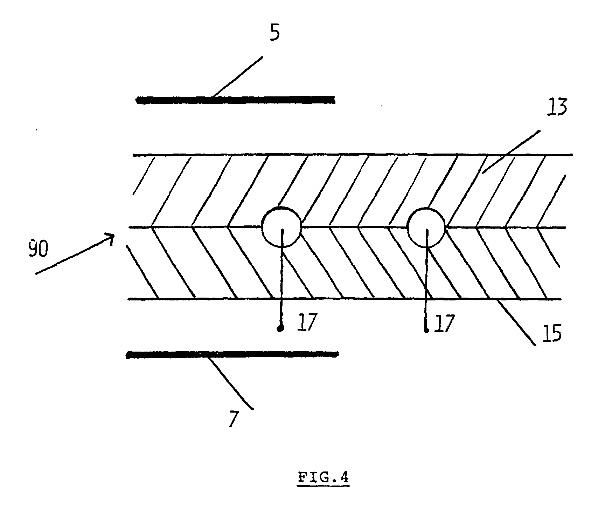

D'autres exemples préférés de géotextiles pouvant être utilisés entre les deux membranes sont décrits aux figures 3 et 4, dans lesquelles on observe plusieurs nappes non tissées aux propriétés mécaniques et hydrauliques essentiellement différentes assemblées entre elles selon des techniques habituelles d'aiguilletage ou de collage.

A la figure 3 est représenté un produit (90) comprenant une nappe filtrante (13) et une nappe drainante (15) emprisonnées entre deux membranes (5 et 7).

La nappe filtrante est de préférence la nappe supérieure à la nappe drainante, et n'est de ce fait en contact que d'un seul côté avec la membrane adjacente (5).

Cette nappe filtrante (13) est de préférence réalisée à partir d'un non tissé aiguilleté à partir de fibres et/ou filaments fins d'un titre compris entre 3 et 22 dtex, éventuellement thermosurfacé, et présentant une masse surfacique comprise entre 150 et 300 g/m², qui est de préférence comprise entre 50 et 120 µm. La perméabilité de cette nappe filtrante reste élevée afin de ne pas limiter les caractéristiques hydrauliques du produit composite. La mouillabilité doit être également de préférence excellente et instantanée. La composition de la nappe filtrante est habituellement à base de fibres et/ou filaments propylène, polyéthylène haute densité ou polyester, ou encore à base d'un mélange de plusieurs sortes de fibres et/ou filaments. A ce mélange de fibres sont ajoutées des fibres antistatiques dans une proportion de 1 à 5% du mélange total et de préférence dans une proportion de 1,5 à 2%. Ces fibres antistatiques ont été décrites précédemment.

La nappe drainante (15) est constituée également à partir d'un non tissé, mais présentant des fibres et/ou filaments plus gros, dont le titre varie entre 6 et 300 dtex, ou éventuellement plus. Cette nappe drainante est habituellement constituée à partir de fibres polypropylène, polyéthylène haute densité ou polyester. L'indice de vide d'une telle nappe doit être particulièrement élevé, et compris entre 85 et 95%. La transmissivité d'une telle nappe drainante sous une charge de 200 kPa est supérieure à 10⁻⁶ m²/s.

Eventuellement, on peut également prévoir d'ajouter à ce mélange des fibres antistatiques, également dans une proportion de 1 à 5% du mélange total de la nappe drainante.

On a prévu de disposer entre la nappe filtrante (13) et la nappe drainante (15) un réseau d'électrodes sensibles reliées entre elles et reliées à une électrode sensible disposée en-dehors de la zone d'étanchéité tel que représenté à la figure 1. Ce réseau d'électrode permettra de déterminer l'endroit exact où aura lieu la fuite. Les nappes filtrante et drainante doivent être dimensionnées de manière à pouvoir absorber la fuite jusqu'au moment où l'on restaure l'étanchéité.

En vue d'améliorer la fonction des nappes drainante et filtrante, on peut associer comme représenté à la figure 4 des mini-drains (17) perforés qui sont disposés entre la nappe filtrante (13) et la nappe drainante (15). Ces mini-drains (17) sont des tubes en polypropylène perforés régulièrement sur leur pourtour. De préférence, ces mini-drains se présentent sous forme annelée et sont perforés dans les gorges desdits anneaux. Ces tubes sont réalisés en matière plastique rigide telle que du PVC, du polypropylène ou du polyéthylène. La structure annelée permettra d'atteindre des résistances importantes à l'écrasement, et de préférence supérieures à 600 kPa. Cette structure annelée permet également d'obtenir une capacité d'allongement du mini-drain comparable à celle des nappes filtrante et drainante associées audit produit.

La présence de tels mini-drains permettra d'atteindre des transmissivités améliorées, de l'ordre de 10⁻³ à 10⁻² m²/s.

Ces mini-drains (17) doivent être ensuite reliés à un collecteur qui aura pour but d'évacuer le liquide ou éventuellement les gaz récoltés par les mini-drains et issus de la fuite dans la membrane.

L'utilisation d'un géotextile tel que décrit ci-dessus combiné à un réseau d'électrodes permettra d'obtenir un contrôle permanent, et donc une surveillance adéquate, de manière à éviter et à prévenir tout risque de fuite importante. De manière particulièrement avantageuse, on se rend compte que ce procédé est indépendant des conditions du sol, c'est-à-dire que celui-ci soit mouillé ou non, et fonctionne en particulier dans le cas d'un milieu sec, car la conductibilité requise provient des fibres du géotextile et non pas de l'environnement d'un sol humide.

## Revendications

1. Procédé de détection de fuites et/ou de surveillance d'ouvrages d'art munis d'une double membrane d'étanchéité, **caractérisé en ce qu'**entre les deux membranes d'étanchéité, on dispose un géotextile conducteur réalisé à partir d'au moins une nappe non tissée comprenant des fibres antistatiques présentant une conductibilité électrique avec une résistance ohmique linéaire inférieure à 1.10⁶ Ohm/cm, ledit géotextile conducteur étant associé à un réseau d'électrodes sensibles, elles-mêmes reliées à une électrode active disposée en-dehors de la zone d'étanchéité, et **en ce que** l'on effectue une mesure du champ électrique par les électrodes sensibles en vue de permettre la détection d'une fuite.

2. Dispositif pour la mise en oeuvre du procédé selon la revendication 1, **caractérisé en ce qu'**un géotextile conducteur réalisé à partir d'au moins une nappe non tissée comprenant des fibres antistatiques présentant une conductibilité électrique avec une résistance ohmique linéaire inférieure à 1.10⁶ Ohm/cm, est associé à un réseau d'électrodes sensibles, elles-mêmes reliées à une électrode active disposée en dehors de la zone d'étanchéité.

3. Dispositif selon la revendication 2, **caractérisé en ce que** le géotextile conducteur est réalisé à partir d'au moins une nappe non tissée comprenant un mélange de fibres dont des fibres antistatiques dans une proportion de 1 à 5% mélangées à des fibres non antistatiques.

4. Dispositif selon l'une des revendications 1 à 3, **caractérisé en ce que** les fibres antistatiques sont des fibres, de préférence polyamide, qui présentent à leur périphérie une faible couche d'un revêtement conducteur.

5. Dispositif selon la revendication 4, **caractérisé en ce que** le revêtement conducteur est une couche de sulfure.

6. Dispositif selon la revendication 3, **caractérisé en ce que** les fibres présentes dans le mélange de fibres constituant la nappe non tissée sont sélectionnées parmi le groupe constitué par des fibres polyamide, polypropylène, polyéthylène ou un mélange de celles-ci.

7. Dispositif selon l'une quelconque des revendications précédentes 2 à 6, **caractérisé en ce que** le géotextile est constitué à partir de deux nappes non tissées solidarisées entre elles dont au moins l'une est une nappe comprenant des fibres antistatiques, des mini-drains étant éventuellement placés entre lesdites nappes.

## Patentansprüche

1. Verfahren zur Lecksuche und/oder zur Überwachung von Kunstbauten, die mit einer doppelten Dichtheitsmembran ausgestattet sind, **dadurch gekennzeichnet, dass** man zwischen den beiden Dichtheitsmembranen ein leitendes Geotextil anordnet, das aus wenigstens einer nicht gewebten Matte verwirklicht worden ist, die antistatische Fasern mit einer elektrischen Leitfähigkeit mit einem linearen ohmschen Widerstand von weniger als 1.10⁶ Ohm/cm enthält, wobei das besagte leitende Geotextil mit einem Netz von empfindlichen Elektroden vereinigt wird, die selbst mit einer aktiven Elektrode verbunden werden, die außerhalb der Dichtheitszone angeordnet wird, und dass man mit den empfindlichen Elektroden eine Messung des elektrischen Feldes vornimmt, um das Auffinden eines Lecks zu erlauben.

2. Vorrichtung zur Durchführung des Verfahrens nach Anspruch 1, **dadurch gekennzeichnet, dass** ein leitendes Geotextil, das aus wenigstens einer nicht gewebten Matte verwirklicht worden ist, die antistatische Fasern mit einer elektrischen Leitfähigkeit mit einem linearen ohmschen Widerstand von weniger als 1.10⁶ Ohm/cm enthält, wobei das besagte leitende Geotextil mit einem Netz von empfindlichen Elektroden vereinigt ist, die selbst mit einer aktiven Elektrode verbunden sind, die außerhalb der Dichtheitszone angeordnet wird.

3. Vorrichtung nach Anspruch 2, **dadurch gekennzeichnet, dass** das leitende Geotextil aus wenigstens einer nicht gewebten Matte verwirklicht wird, die eine Mischung von Fasern aufweist, wovon die antistatischen Fasern in einem Verhältnis von 1 bis 5 % mit nicht antistatischen Fasern vermischt sind.

4. Vorrichtung nach einem der Ansprüche 1 bis 3, **dadurch gekennzeichnet, dass** die antistatischen Fasern vorzugsweise Polyamidfasern sind, die an ihrem Umfang eine dünne Schicht einer leitenden Beschichtung aufweisen.

5. Vorrichtung nach Anspruch 4, **dadurch gekennzeichnet, dass** die leitende Beschichtung eine Sulfidschicht ist.

6. Vorrichtung nach Anspruch 3, **dadurch gekennzeichnet, dass** die Fasern, die in der Fasermischung vorhanden sind, welche die nicht gewebte Matte bildet, aus der Gruppe bestehend aus Fasern aus Polyamid, Polypropylen, Polyethylen ausgewählt werden, oder aus einer Mischung derselben.

7. Vorrichtung nach irgendeinem der vorhergehenden Ansprüche 2 bis 6, **dadurch gekennzeichnet, dass** das Geotextil ausgehend von zwei nicht gewebten Matten gebildet wird, die miteinander verbunden sind und wovon wenigstens eine eine Matte ist, die antistatische Fasern enthält, wobei gegebenfalls Minidrainrohre zwischen den besagten Matten angeordnet sind.

## Claims

1. Method for detecting leaks and/or monitoring constructions provided with a double sealing skin, **characterized in that** a conductive geotextile made from at least one non-woven sheet comprising antistatic fibres having an electrical conductivity with a linear ohmic resistance of less than 1.10⁶ ohm/cm is arranged between the two sealing skins, said conductive geotextile being combined with an array of sensitive electrodes which are themselves connected to an active electrode arranged outside the sealing zone, and **in that** a measurement of the electric field is taken with the sensitive electrodes in order to make it possible to detect a leak.

2. Device for implementing the method according to claim 1, **characterized in that** a conductive geotextile made from at least one non-woven sheet comprising antistatic fibres having an electrical conductivity with a linear ohmic resistance of less than 1.10⁶ ohm/cm is combined with an array of sensitive electrodes which are themselves connected to an active electrode arranged outside the sealing zone.

3. Device according to claim 2, **characterized in that** the conductive geotextile is made from at least one non-woven sheet of non antistatic fibres mixed with antistatic fibres in a proportion of from 1 to 5%.

4. Device according to any of the claims 1 to 3, **characterized in that** the antistatic fibres are fibres, preferably polyamide fibres, at the periphery of which a thin layer of a conductive coating has been fixed.

5. Device according to claim 4, **characterized in that** the conductive coating is a sulphide layer.

6. Device according to claim 3, **characterized in that** the fibres of the fibre mixture of the non-woven sheet are chosen among the group of polyamide, polypropylene or polyethylene fibres or a mixture thereof.

7. Device according to any one of the preceding claims 2 to 6, **characterized in that** the geotextile is made from two non-woven sheets which are secured to one another, wherein at least one of the sheets comprises antistatic fibres, and between which mini-drains are optionally placed.
